Europäisches Patentamt

European Patent Office

Office européen des brevets

(19)

(11) Numéro de publication : **0 337 830 B1**

(12) **FASCICULE DE BREVET EUROPEEN**

(45) Date de publication du fascicule du brevet :
**02.06.93 Bulletin 93/22**

(51) Int. Cl.⁵ : **B64D 13/04,** G05D 11/03,
F24F 11/04

(21) Numéro de dépôt : **89400761.6**

(22) Date de dépôt : **17.03.89**

(54) **Dispositif d'équilibrage de débit d'un fluide pour climatisation d'aéronef.**

(30) Priorité : **17.03.88 FR 8803430**

(43) Date de publication de la demande :
**18.10.89 Bulletin 89/42**

(45) Mention de la délivrance du brevet :
**02.06.93 Bulletin 93/22**

(84) Etats contractants désignés :
**DE GB**

(56) Documents cités :
EP-A- 0 128 690
EP-A- 0 190 943
DE-A- 2 947 216
FR-A- 1 375 757
GB-A- 1 180 582
US-A- 3 394 722
US-A- 3 847 172

(73) Titulaire : **ABG-SEMCA**
**408, avenue des Etats-Unis**
**F-31000 Toulouse (FR)**

(72) Inventeur : **Bois, Didier**
**Thomson-CSF SCPI Cedex 67**
**F-92045 Paris la Défense (FR)**
Inventeur : **Renaux, Jean-Michel**
**Thomson-CSF SCPI Cedex 67**
**F-92045 Paris la Défense (FR)**

(74) Mandataire : **Ruellan-Lemonnier, Brigitte et al**
**THOMSON-CSF, SCPI, B.P. 329, 50, rue**
**Jean-Pierre Timbaud**
**F-92403 Courbevoie Cédex (FR)**

## Description

L'invention a principalement pour objet un dispositif d'équilibrage de débit d'un fluide, un dispositif de climatisation d'aéronef comportant ledit dispositif d'équilibrage et aéronef comportant ledit dispositif de climatisation.

Un dispositif de régulation de pression d'un fluide doit pouvoir fournir, sur commande, le fluide sous une pression désirée quel que soit le débit. Il existe des solutions acceptables pour la régulation de pression de fluide obtenues à partir d'une source unique. Par contre, dans le cas de l'utilisation de deux sources de fluide, un déséquilibre même minime entre pressions délivrées par ces sources à travers les dispositifs de régulation empêche l'écoulement du fluide en provenance de la source ayant la pression régulée par le dispositif de régulation la plus faible. Par exemple, si on utilise un prélèvement d'air au niveau des moteurs d'un avion à réaction, seul le moteur ayant le dispositif régulant la pression la plus grande aura un débit non nul. La pression régulée de l'air fournit par ce moteur va bloquer la valve d'admission d'air du moteur ayant la pression régulée la plus basse.

Un tel déséquilibre a les conséquences très néfastes sur les conditions économiques de l'exploitation de l'aéronef. En effet, il provoque un déséquilibre en puissance utilisé des moteurs et augmente fortement la consommation.

Dans le dispositif selon la présente invention, l'équilibrage entre les deux sources est obtenu par l'adjonction au niveau de chaque dispositif de régulation de chaque source d'un dispositif d'asservissement de la pression selon le débit désiré.

L'invention a principalement pour objet un dispositif d'équilibrage de débit d'un fluide comportant des moyens de mesure de débit, caractérisé en ce qu'il comprend des moyens de régulation de pression commandés par lesdits moyens de mesure et délivrant le fluide à une pression telle que la pente de la courbe de ladite pression en fonction du débit soit négative.

L'invention a aussi pour objet. un aéronef, caractérisé en ce qu'il comprend au moins deux sources de fluide sous pression, le débit de chaque source étant équilibré par un dispositif du type de celui mentionné ci-dessus.

L'invention sera mieux comprise au moyen de la description ci-après et des figures annexées données comme des exemples non limitatifs parmi lesquelles :

- la figure 1 est un premier schéma explicatif de fonctionnement du dispositif selon la présente invention ;
- la figure 2 est un deuxième schéma explicatif de fonctionnement du dispositif selon la présente invention ;
- la figure 3 est un troisième schéma explicatif de fonctionnement du dispositif selon la présente invention ;
- la figure 4 est un quatrième schéma explicatif de fonctionnement du dispositif selon la présente invention ;
- la figure 5 est un cinquième schéma explicatif de fonctionnement du dispositif selon la présente invention ;
- la figure 6 est un sixième schéma explicatif de fonctionnement du dispositif selon la présente invention ;
- la figure 7 est une vue en coupe d'un premier exemple de réalisation du dispositif selon la présente invention ;
- la figure 8 est une vue en coupe d'un deuxième exemple de réalisation du dispositif selon la présente invention ;
- la figure 9 est un schéma d'un dispositif de climatisation d'avion selon la présente invention ;
- la figure 10 est une vue en perspective d'un avion selon la présente invention.

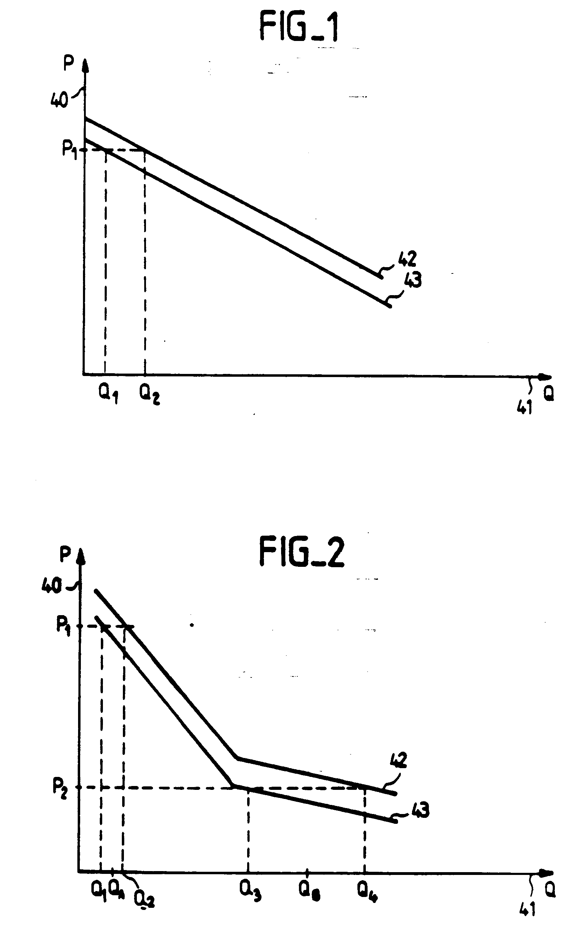

Sur les figures 1 à 10 on a utilisé les mêmes références pour désigner les mêmes éléments.

Sur la figure 1, on peut voir une courbe 42 donnant la pression P 40 délivrée par une vanne commandée par le dispositif selon la présente invention, en fonction du débit Q 41 demandé. La courbe 43 correspond à un second dispositif selon la présente invention. Les courbes 42 et 43 ne se superposent pas nécessairement car les deux dispositifs de régulation de pression des deux sources de fluide n'ont pas nécessairement exactement le même niveau de régulation. Sur la figure 1, les deux courbes de la pression P en fonction du débit Q sont des droites parallèles. Pour diminuer le déséquilibre entre le prélèvement au niveau des diverses sources de fluide il est important que la pente des courbes 42 et 43 soit importante. Dans la mesure où il est impératif d'éviter des trop fortes différences de débit pour des débits faibles, la dérivée $\frac{dP}{dQ}$ doit être négative et aussi grande que possible en valeur absolue. Ainsi, pour une pression prélevée $P_1$ on obtient des débits prélevés $Q_1$ et $Q_2$.

Toutefois, la solution illustrée sur la figure 1 présente le désavantage de faire chuter trop rapidement la pression. Ainsi, pour des débits importants, il ne sera pas toujours possible de fournir la pression nécessaire au fonctionnement de, par exemple, un circuit de climatisation.

Sur la figure 2, on peut voir deux courbes 42, 43 représentant la variation de la pression P en fonction du débit Q pour deux dispositifs de régulation selon la présente invention. Les courbes 42 et 43 de la figure 2 présentent deux pentes distinctes, une pente importante correspondant aux pressions élevées et aux débits faibles et une pente plus faible correspondant aux pressions faibles et aux débits plus élevés. Dans l'exemple illustré sur la figure 2, les courbes 42 et 43 comportent des serpents de droite.

La pente élevée pour des débits faibles permet d'obtenir une faible différence entre le débit $Q_1$ et $Q_2$ quand un débit moyen par source $Q_A$ est demandé. Les débits $Q_1$ et $Q_2$ sont fournis à une première pression $P_1$.

Pour des débits plus forts, les différences entre les débits $Q_3$ et $Q_4$ fournies par deux sources sous une pression $P_2$ sont plus grands. Toutefois, la différence relative n'est pas augmentée et on rentre par exemple dans la tolérance admise pour ce type de dispositif. Par exemple on exige que l'écart entre le débit d'air prélevé dans un des réacteurs d'un avion soit inférieur à 20 % de la quantité d'air prélevée sur l'autre réacteur. L'utilisation d'une pente plus douce pour des débits élevés permet de réduire la baisse de pression.

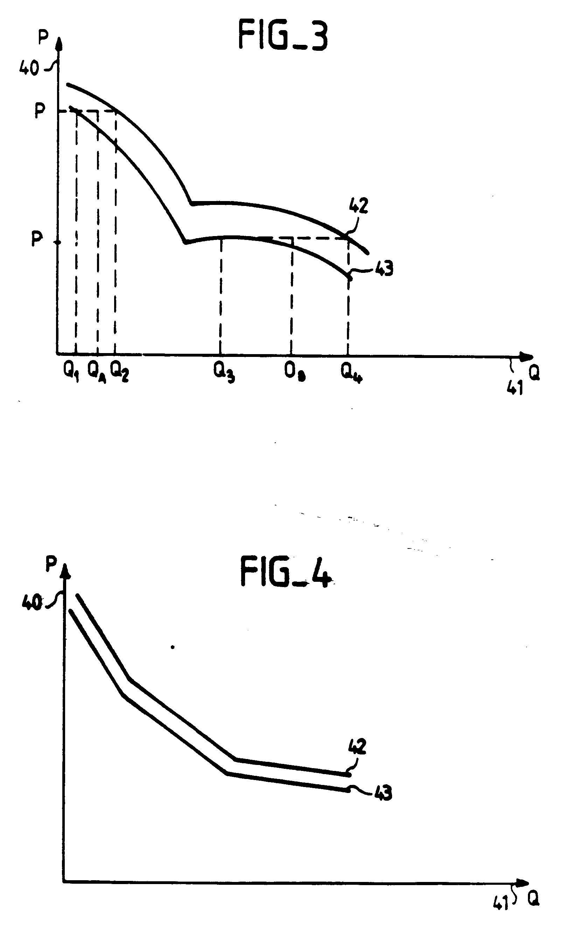

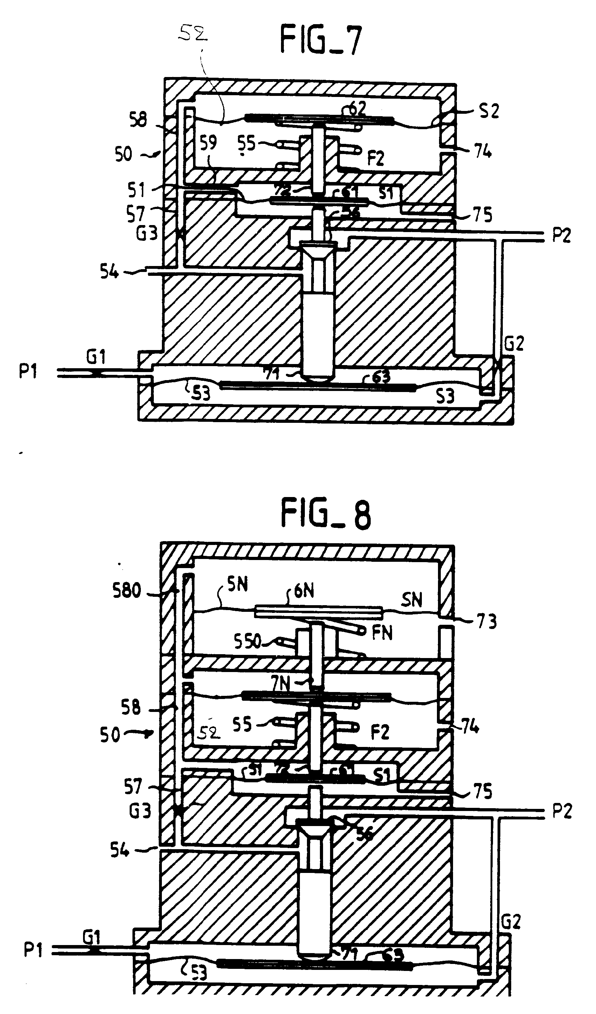

Sur la figure 3, on peut voir deux courbes 42 et 43 présentant chacune un point d'inflexion. Chaque courbe présente un rayons de courbure. Les courbes illustrées sur la figure 3 correspondent à la réalisation du dispositif selon l'invention illustrée sur la figure 7.

L'invention n'est pas limitée à des courbes 42 ou 43 présentant uniquement deux pentes.

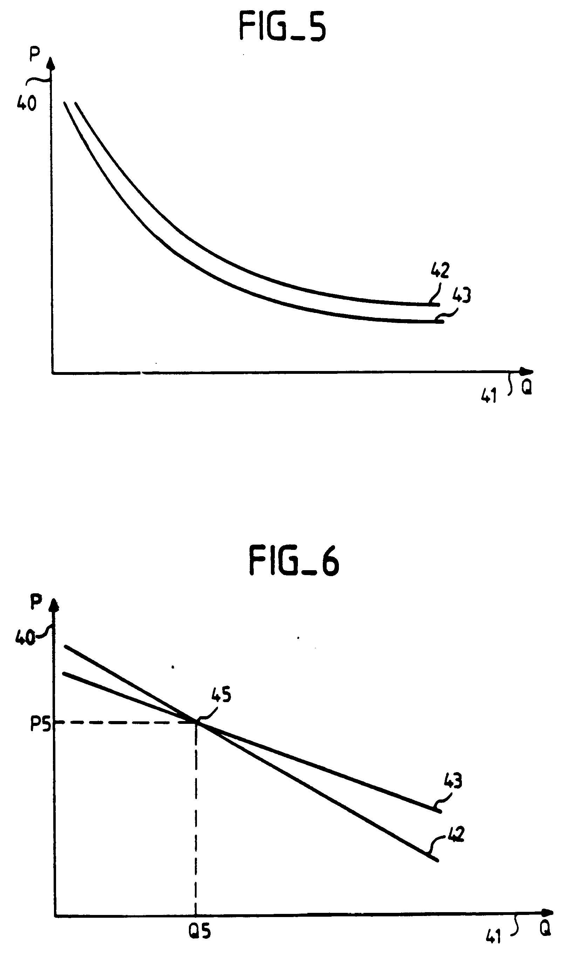

Sur la figure 4, on a illustré deux courbes 42 et 43 présentant trois pentes. Il est bien entendu qu'un nombre de pentes supérieur ne sort pas du cadre de la présente invention. En utilisant des courbes paraboliques telles qu'illustrées sur la figure 5 pour toute pression P on obtient le même écart relatif entre le débit Q de chacune des sources.

Sur la figure 6, on peut voir les courbes 42 et 43 se croisant en un point 45. Le point 45 correspond à une pression $P_5$ à un débit $Q_5$ de chacune des sources. Au point 45 le déséquilibre entre les sources correspondantes aux courbes 42 et 43 est inversé.

Sur la figure 7, on peut voir un premier exemple de réalisation du dispositif selon la présente invention. Le dispositif 50 de la figure comporte deux entrées permettant de recevoir la pression P1 et la pression P2. Les deux entrées sont susceptibles d'être reliées à deux points du circuit pneumatique afin de permettre de mesurer le débit du circuit d'après la différence de pression entre deux points de celui-ci. L'entrée portée à la pression P1 débouche sur une première face d'une membrane 53 et à une surface S3. La seconde entrée P2 est reliée, d'une part à la seconde face de la membrane 53 et d'autre part à l'entrée d'un clapet 56.

Avantageusement, la membrane 53 comporte une partie rigide centrale 63. Un piston 71 est susceptible de relier la membrane 53 au clapet 56 de telle manière qu'une augmentation de la différence entre la pression P2 et P1 provoque une déformation de la membrane 53 qui ouvrira le clapet 56. La sortie du clapet 56 est reliée d'une part à une sortie 54 et d'autre part par des conduits 57 et 58 aux premières faces des membranes 51 et 52. Avantageusement, les membranes 51 et 52 comportent des parties centrales rigides, respectivement 61 et 62. Les secondes faces des membranes 51 et 52 reçoivent la pression ambiante par des ouvertures 75 et 74. La membrane 51 a une surface S1. La membrane 52 a une surface S2. La membrane 51 est reliée au clapet 56. L'augmentation de la pression $P_2$ par rapport à la pression ambiante a tendance à refermer le clapet 56. La membrane 51 joue le rôle de détendeur.

La membrane 52 est susceptible d'être reliée au clapet 56 par un piston 72. Comme la membrane 51, la membrane 52 a tendance à refermer le clapet 56 quand la pression P2 augmente par rapport à la pression ambiante. Mais, avant de pouvoir agir sur le clapet 56 la membrane 52 doit vaincre une force F2 de sens opposé. La force F2 est avantageusement exercée par la déformation d'un élément élastique comme par exemple un ressort 55. La présence du ressort 55 permet de modifier la pente des courbes 42 ou 43.

Avantageusement, le dispositif selon la présente invention comporte le rétrécissement permettant de créer une temporisation dans le dispositif. Par exemple, le dispositif selon la présente invention comporte un rétrécissement G1 sur l'entrée de la pression P1 , un rétrécissement G2 sur l'entrée de la pression P2 sur la branche reliée à la membrane 53 et un rétrécissement G3 sur les conduits 57 et 58 placés en série.

La pression à la sortie 54 dépend de la surface S1 et de l'effort fourni sur le clapet 56. L'effort exercé sur le clapet 56 dépend de P2 - P1 et la surface S2. Appelons $P_{det}$ la pression détendue présente à la sortie 54.

Tant que la surface S2 que multiplie la différence entre la pression $P_{det}$ et la pression ambiante est inférieure à la force F2 du ressort 55 $P_{det}$ est égal P2 - P1 que multiplie S3 et que divise S1. Dans un tel cas le piston 72 n'a aucune action sur le clapet 56. Quand la pression détendue devient supérieure à F2/S2 $P_{det}$ égal F + S3 (P2 - P1).

Il est bien entendu que l'invention n'est pas limitée à l'existence d'une telle membrane comportant un ressort.

Dans l'exemple de réalisation illustré sur la figure 8, l'air issu du clapet 56 est amené par un conduit 58 à une membrane 5N de surface SN. La membrane 5N a un centre rigide 6N. La seconde face de la membrane 5N reçoit la pression ambiante par une ouverture 73. La membrane 5N est reliée par un piston 7N au clapet 56. Toutefois, la force FN d'un ressort 550 s'oppose à l'action de la membrane 5N sur le clapet 56.

Avantageusement, la force FN exercée par le ressort 550 est supérieure à la force F2 exercée par le ressort 55.

Un exemple de réalisation électronique du dispositif selon l'invention comporte des moyens de mesure de débit fournissant les mesures soit directement, soit sur un bus de données numériques après conversion analogique-numérique. Le bus de données est un bus d'adresse d'une table. La table est avantageusement une mémoire morte, programmable, effaçable ou électriquement effaçable (ROM, PROM, EPROM, EEPROM). La table délivre alors la valeur numérique de la valeur de commande d'un régulateur sur un autre bus de données. Dans le cas où le régulateur nécessiterait de recevoir des valeurs analogiques on incorpore un convertisseur numérique-analogique entre la table et le régulateur. Le régulateur exerce alors une action sur, par exemple, une valve.

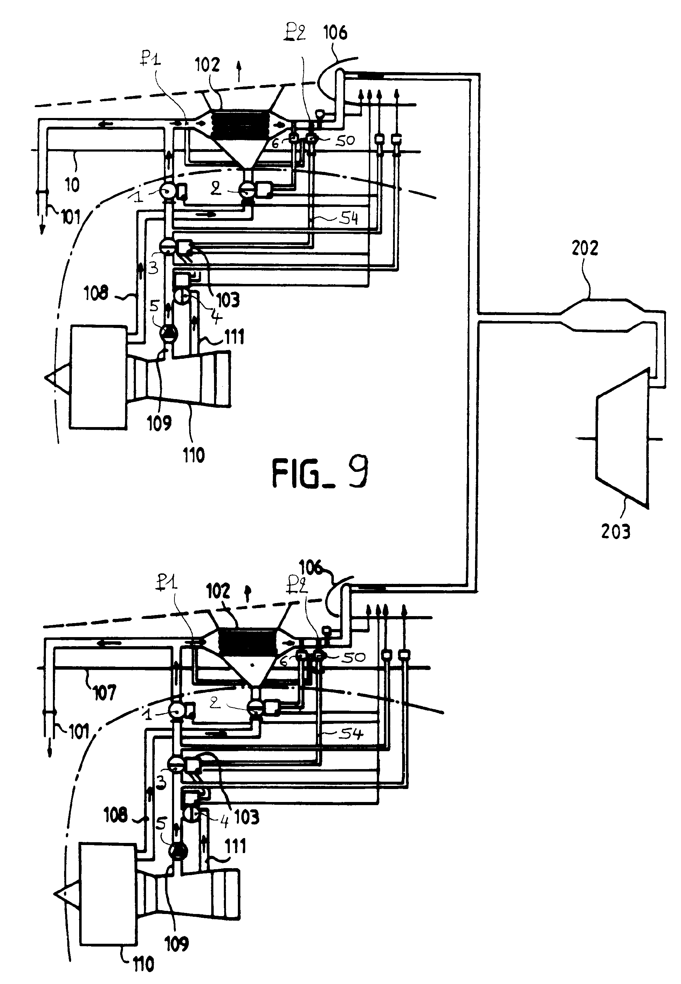

Sur la figure 9, on peut voir un dispositif de climatisation d'avion selon la présente invention. Dans l'exemple illustré on utilise le prélèvement d'air à partir de deux moteurs 110. Il est bien entendu que le prélèvement d'air dépend des types de moteurs utilisés. Dans l'exemple illustré sur la figure 9, les moteurs 110 sont des moteurs à réaction à forte dilution. On effectue un premier prélèvement d'air par une conduite 108 au niveau du ventilateur d'un turbo réacteur. L'air prélevé par la conduite 108 a, par exemple, une température de 90° C à une pression de 1,5 bar. D'autre part, on prélève par une conduite 109, la pression intermédiaire par exemple à 12 bars et 420°. On prélève d'autre part par une conduite 111 de l'air à haute pression par exemple 23 bars à 600° C. Avantageusement, la conduite 109 est équipée d'un clapet anti-retour 5. La conduite 109 est reliée à la conduite 111 par une vanne de régulation 4. La vanne de régulation 4 permet d'amener l'air dans la conduite 109 à la pression désirée. Le conduite 109 comporte en outre une vanne de pression 3 permettant de fournir le débit Q demandé à la pression désirée. La vanne 3 est régulée par un dispositif d'équilibrage de débit 103 selon la présente invention. Avantageusement, la conduite 109 comporte en outre une vanne de surpression 1. La conduite 109 est connectée à un premier échangeur 102. Dans l'exemple de réalisation illustré sur la figure 11, le premier échangeur 102 est refroidi par l'air froid fourni par la conduite 108 et une vanne 2. L'air de la conduite 108 est rejeté à l'extérieur. Avantageusement, le dispositif comporte en outre un thermostat 6 permettant de moduler le débit d'air froid fourni par la vanne 2. Le thermostat 6 est par exemple placé à la sortie de l'échangeur 102. Les sorties des échangeurs 102 correspondant aux deux moteurs 110 se rejoignent pour aller alimenter en air sous pression un dispositif de climatisation. Le dispositif de climatisation comporte par exemple un échangeur 202 et une turbine de détente 203. L'échangeur 202 permet le refroidissement de l'air. La détente dans la turbine 203 permet d'amener l'air de refroidissement à la température désirée. Avantageusement, on récupère le travail fourni par la turbine de détente 203.

Les conduites de l'air sous pression passent par l'aile 106 de l'avion.

Le dispositif 103 de régulation de la vanne 3 est avantageusement commandé par un dispositif 50 de la figure 7.

Il est bien entendu que d'autres prélèvements d'air à diverses températures et pressions peuvent être utilisés pour les besoins du fonctionnement de l'avion. Par exemple à la sortie de la vanne 1 une conduite 101 est dirigée vers la vanne de démarrage des moteurs. Les divers dispositifs utilisés sont adaptés aux températures et aux pressions auxquels ils doivent pouvoir fonctionner. Pour plus de sécurité de fonctionnement tout avion comporte une cloison pare-feu 107.

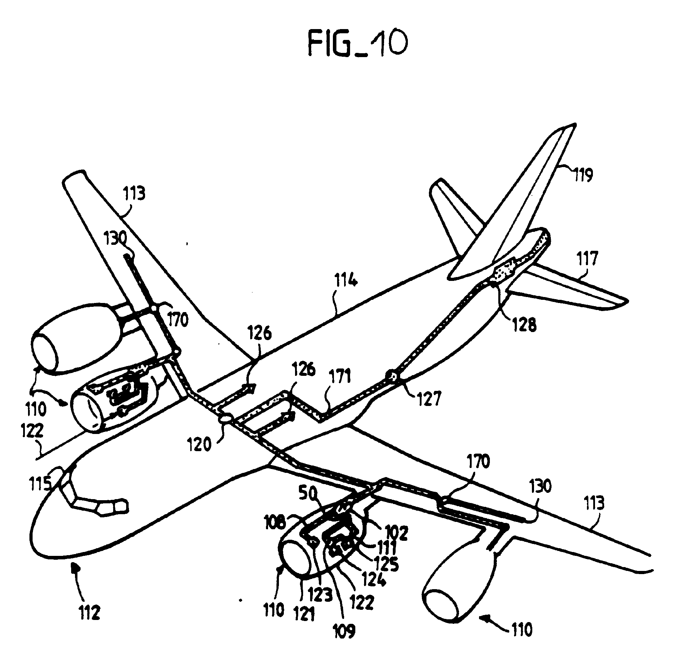

Sur la figure 10, on peut voir un exemple de réalisation d'avion selon la présente invention. L'avion comporte deux ailes 113, par exemple quatre moteurs 110, un corps 114, un cockpit 115, un gouvernail de direction 119, un volet de profondeur 117. Les moteurs 110 comportent des démarreurs 122, le dispositif selon l'invention s'accompagne d'une vanne de prise d'air d'aspiration 123, pression intermédiaire 124 et haute pression 125. L'air refroidi par le premier échangeur 102 est conduit vers les dispositifs de conditionnement d'air 126 non représentés sur la figure. D'autre part, le dispositif comporte une vanne d'isolation 120 permettant d'isoler les circuits correspondants à la droite et à la gauche de l'avion. D'autre part l'air sous pression est envoyé à travers une vanne 170 dans un circuit de dégivrage d'avion 130. De même un dispositif 121 permet le dégivrage des bords d'attaque des réacteurs 110. Le circuit gauche est d'autre part relié à l'arrière de l'avion par une conduite 171, une vanne de contrôle 127, un dispositif de pressurisation 128. Le dispositif de pressurisation 128 permet de fournir de l'air sous pression quand les moteurs 110 sont arrêtés.

L'invention s'applique à tout dispositif d'équilibrage de débit d'un fluide. Le dispositif d'équilibrage selon la présente invention s'applique notamment à la constitution d'alimentation en fluide à partir de deux sources.

L'invention s'applique principalement à la réalisation de circuits de prélèvement d'air moteur pour aéronef.

## Revendications

1. Dispositif d'équilibrage de débit d'un fluide comportant des moyens (50) de mesure de débit Q, caractérisé en ce qu'il comprend des moyens (3, 103) de régulation de pression commandés par lesdits moyens (50) de mesure et délivrant le fluide à une pression P1 telle que la perte dP1/dQ de la courbe de la pression P1 en fonction du débit Q soit négative.

2. Dispositif selon la revendication 1, caractérisé en ce que les moyens (50) de mesure de débit comprennent des moyens (55, 550, 52, 5N) permettant de faire varier la pente dP1/dQ de ladite courbe.

3. Dispositif selon la revendication 2, caractérisé en ce que les moyens (55, 550, 52, 5N) permettant de faire varier la pente dP1/dQ sont tels que la pente est plus forte pour les pressions supérieures à une valeur donnée et plus faible pour les pressions inférieures à ladite valeur.

4. Dispositif selon la revendication 2, caractérisé en ce que les moyens (55, 550, 52, 5N) permettant de faire varier la pente dP1/dQ sont tels que la courbe de variation de la pression P1 en fonction du débit Q a sensiblement la forme d'une parabole.

5. Dispositif selon l'une quelconque des revendications 1, 2, 3 ou 4, caractérisé en ce que es moyens (50) de mesure de débit comprennent des moyens de mesure de différence de pressions (53, 63).

6. Dispositif selon la revendication 5, caractérisé en ce que les moyens de mesure de différence de pressions (53, 63) comportent une membrane (53).

7. Dispositif selon la revendication 6, caractérisé en ce que les moyens de mesure de débit comprennent des éléments élastiques (55) de rappel de la membrane.

8. Dispositif selon la revendication 7, caractérisé en ce que les éléments élastiques (55) de rappel sont constitués d'un ressort.

9. Dispositif selon l'une quelconque des revendications 6, 7 ou 8, caractérisé en ce que la membrane (53) comporte un élément rigide (63) placé en son centre.

10. Dispositif selon l'une quelconque des revendications précédentes, caractérisé en ce qu'il comporte des organes déprimogènes (G1, G2, G3).

11. Aéronef caractérisé en ce qu'il comprend au moins deux sources de fluide sous pression, le débit de chaque source étant équilibré par un dispositif selon l'une quelconque des revendications 1 à 10.

12. Dispositif de climatisation comportant au moins deux sources de fluide sous pression, le débit de chaque source étant équilibré par un dispositif selon l'une quelconque des revendications 1 à 10.

13. Aéronef caractérisé en ce qu'il comprend un dispositif de climatisation selon la revendication 12, le fluide sous pression étant de l'air fourni par les moteurs de l'aéronef.

**Patentansprüche**

1. Vorrichtung zum Ausgleichen des Durchsatzes eines Fluids mit Meßmitteln (50) für den Durchsatz Q, dadurch gekennzeichnet, daß sie Druckregler- bzw. Druckeinstellmittel (3, 103) enthält, die von diesen Meßmittel (50) gesteuert werden und das Fluid mit einem solchen Druck P1 ausgeben, daß die Steigung dP1/dQ der Kurve des Druckes P1 in Abhängigkeit vom Durchsatz Q negativ ist.

2. Vorrichtung gemäß dem Anspruch 1, dadurch gekennzeichnet, daß die Durchsatzmeßmittel (50) Mittel (55, 550, 52, 5N) enthalten, die ein Verändern der Steigung dP1/dQ der Kurve ermöglichen.

3. Vorrichtung gemäß dem Anspruch 2, dadurch gekennzeichnet, daß die Mittel (55, 550, 52, 5N), die ein Verändern der Steigung dP1/dQ ermöglichen, so sind, daß die Steigung für Drücke oberhalb eines gegebenen Wertes größer und für Drücke unterhalb dieses Wertes kleiner ist.

4. Vorrichtung gemäß dem Anspruch 2, dadurch gekennzeichnet, daß die Mittel (55, 550, 52, 5N), die ein Verändern der Steigung dP1/dQ ermöglichen, so sind, daß die vom Durchsatz Q abhängige Veränderungskurve des Druckes P1 im wesentlichen die Form einer Parabel besitzt.

5. Vorrichtung gemäß einem der Ansprüche 1, 2, 3 oder 4, dadurch gekennzeichnet, daß die Durchsatzmeßmittel (50) Druckdifferenz-Meßmittel (53, 63) enthalten.

6. Vorrichtung gemäß dem Anspruch 5, dadurch gekennzeichnet, daß die Druckdifferenz-Meßmittel (53, 63) eine Membrane (53) enthalten.

7. Vorrichtung gemäß dem Anspruch 6, dadurch gekennzeichnet, daß die Durchsatzmeßmittel elastische Rückstellelemente (55) für die Membrane enthalten.

8. Vorrichtung gemäß dem Anspruch 7, dadurch gekennzeichnet, daß die elastischen Rückstellelemente (55) aus einer Feder gebildet sind.

9. Vorrichtung gemäß einem der Ansprüche 6, 7 oder 8, dadurch gekennzeichnet, daß die Membrane (53) ein starres Element (63) enthält, das in ihrer Mitte angeordnet ist.

10. Vorrichtung gemäß einem der vorhergehenden Ansprüche, dadurch gekennzeichnet, daß sie Unterdruckorgane (G1, G2, G3) enthält.

11. Luftfahrzeug, dadurch gekennzeichnet, daß es zumindest zwei unter Druck stehende Fluidquellen enthält, wobei die Ausströmmenge jeder Quelle durch eine Vorrichtung gemäß einem der Ansprüche 1 bis 10 ausgeglichen wird.

12. Klimaanlage mit mindestens zwei unter Druck stehenden Fluidquellen, bei der die Ausströmmenge jeder Quelle durch eine Vorrichtung gemäß einem der Ansprüche 1 bis 10 ausgeglichen wird.

13. Luftfahrzeug, dadurch gekennzeichnet, daß es eine Klimaanlage gemäß dem Anspruch 12 enthält, wobei das unter Druck stehende Fluid die Luft ist, die von den Motoren des Luftfahrzeugs geliefert wird.

**Claims**

1. Device for balancing the flow rate of a fluid comprising flow rate Q measuring means (50), characterised in that it comprises pressure regulating means (3, 103) controlled by the said measuring means (50) and delivering the fluid at a pressure P1 such that the slope dP1/dQ of the curve of the pressure P1 as a function of the flow rate Q is negative.

2. Device according to Claim 1, characterised in that the flow rate measuring means (50) comprise means (55, 550, 52, 5N) allowing the slope dP1/dQ of the said curve to be varied.

3. Device according to Claim 2, characterised in that the means (55, 550, 52, 5N) allowing the slope dP1/dQ to be varied are such that the slope is greater for pressures above a given value and lesser for pressures below the said value.

4. Device according to Claim 2, characterised in that the means (55, 550, 52, 5N) allowing the slope dP1/dQ to be varied are such that the variation curve of the pressure P1 as a function of the flow rate Q has substantially the shape of a parabola.

5. Device according to any one of Claims 1, 2, 3 or 4, characterised in that the flow rate measuring means (50) comprise pressure difference measuring means (53, 63).

6. Device according to Claim 5, characterised in that the pressure difference measuring means (53, 63) comprise a membrane (53).

7. Device according to Claim 6, characterised in that the flow rate measuring means comprise elastic elements (55) for return of the membrane.

8. Device according to Claim 7, characterised in that the elastic return elements (55) are constituted by a spring.

9. Device according to any one of Claims 6, 7 or 8, characterised in that the membrane (53) comprises a rigid element (63) placed at its centre.

10. Device according to any one of the preceding claims, characterised in that it comprises vacuum-generating members (G1, G2, G3).

11. Aircraft characterised in that it comprises at least two sources of pressurised fluid, the flow rate of each source being balanced by a device according to any one of Claims 1 to 10.

12. Air-conditioning device comprising at least two sources of pressurised fluid, the flow rate of each source being balanced by a device according to any one of Claims 1 to 10.

13. Aircraft characterised in that it comprises an air-conditioning device according to Claim 12, the pressurised fluid being air supplied by the aircraft engines.

# FIG_1

# FIG_2

# FIG_3

# FIG_4

# FIG_5

# FIG_6

## FIG_7

52

58
50
59 55
62 S2
F2 74

51
57
G3
G1
54

72 S1
75
P2

G1
P1
71
S3
63
G2
S3

## FIG_8

580
SN 6N SN
73

58
50
52 55
7N
S1 72 S1 S1
FN
550
F2 74

57
G3
54
75
56
P2

P1
G1
71
53
69
G2

FIG_ 9

## FIG_10